(19) Europäisches Patentamt European Patent Office Office européen des brevets

(11) **EP 4 027 419 B1**

(12) **EUROPEAN PATENT SPECIFICATION**

(45) Date of publication and mention
of the grant of the patent:
**27.03.2024 Bulletin 2024/13**

(21) Application number: **21151151.4**

(22) Date of filing: **12.01.2021**

(51) International Patent Classification (IPC):
**C25B 1/042** (2021.01)    **C25B 15/023** (2021.01)
**C25B 9/70** (2021.01)    **H02J 1/10** (2006.01)
**H01M 8/0656** (2016.01)    **H01M 8/18** (2006.01)
**H01M 8/04007** (2016.01)    **H01M 8/04298** (2016.01)
**H01M 8/0432** (2016.01)    **H01M 8/249** (2016.01)
**H01M 8/04858** (2016.01)    **H01M 8/12** (2016.01)
**C25B 15/027** (2021.01)

(52) Cooperative Patent Classification (CPC):
**C25B 1/042; C25B 9/70; C25B 15/023;**
**C25B 15/027; H01M 8/04007; H01M 8/04305;**
**H01M 8/0432; H01M 8/0488; H01M 8/0491;**
**H01M 8/0494; H01M 8/12; H01M 8/186;**
**H01M 8/249; H02J 1/102;** H01M 2008/1293;

(Cont.)

(54) **POWER CONVERTER SYSTEMS FOR ELECTROLYSIS STACKS**

STROMRICHTERSYSTEME FÜR ELEKTROLYSESTAPEL

SYSTÈMES DE CONVERTISSEUR DE PUISSANCE POUR EMPILEMENT D'ÉLECTROLYSE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**13.07.2022 Bulletin 2022/28**

(73) Proprietor: **DynElectro ApS**
**4130 Viby Sjaelland (DK)**

(72) Inventors:
• **HØJGAARD JENSEN, Søren**
**4621 Gadstrup (DK)**
• **SCHALTZ, Erik**
**9220 Aalborg Øst (DK)**

• **MUNK NIELSEN, Stig**
**9220 Aalborg Øst (DK)**

(74) Representative: **Grünecker Patent- und**
**Rechtsanwälte**
**PartG mbB**
**Leopoldstraße 4**
**80802 München (DE)**

(56) References cited:
**WO-A1-2018/033948**    **WO-A1-2020/201485**
**US-A1- 2019 127 867**    **US-B2- 7 642 292**
**US-B2- 10 081 872**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
H01M 2250/10; H01M 2250/402; Y02E 60/50

**Description**

**FIELD OF INVENTION**

This invention relates to a power converter system for a plurality of electrolysis cell stack units, which enables facilitated and inexpensive power distribution, as well as improved thermal management during operation of the electrolysis cell stacks and/or prolonged lifetime of the electrolysis cell stacks.

In further aspects, the invention relates to a power distribution system and electrolysis plant comprising said power converter system, as well as to related methods.

**BACKGROUND OF THE INVENTION**

Due to their intrinsic capability of converting electrical energy into chemical energy, electrolysis systems are generally considered as a key technology for a renewable energy economy. However, effective operation of a large-scale electrolysis plant (e.g. operating at MW scale power) comprising a high number of electrolysis cell stacks involves several challenges.

Effective thermal management represents one of these challenges. For instance, high temperature electrolysis cells (such as, e.g., Solid Oxide Electrolysis Cells (SOECs)) typically operating at temperatures of 600 to 900 °C require heat to be supplied to the cells to sustain the endothermic electrolysis reaction. Heat supply may be accomplished by preheating the inlet gas or, alternatively, by operating the electrolysis cell stack at thermoneutral potential $E_{tn}$, which represents the SRU (single repeating unit consisting of a electrolysis cell and an interconnect) voltage where the Joule heat (i.e. heat generated by current running through the internal resistance in the SRU) matches the heat required by the electrolysis reaction, so that energy input from or output to outside may be minimized and electrolysis efficiency may be improved. However, in SOEC systems (e.g., including steam and/or $CO_2$ electrolyzers) working under typical temperatures and gas compositions at ambient pressure, operation of a single repeating unit at $E_{tn}$ typically causes excessive degradation due to the high electrode overvoltage in the SRU and/or adsorption of impurities at the electrochemically active sites in the electrode. Increasing the SRU voltage above $E_{tn}$ (and thus further increasing the electrolysis current density) further accelerates degradation, lowers the conversion efficiency and increases the need for thermal control to dissipate the excessive Joule heat. On the other hand, if a high-temperature electrolysis cell stack is operated with an SRU voltage between OCV and $E_{tn}$, the gas inside the stack will typically cool down from inlet towards outlet. The temperature from gas inlet to gas outlet may significantly drop despite of extensive efforts to limit the temperature decrease inside the stack with a sweeping gas. With decreasing temperature, the internal resistance increases, which in turn decreases the absolute current density at stack outlet and causes an uneven current distribution in the stack. Operating an electrolysis stack by drawing a constant current from an electrical supply (thus resulting in constant voltage operation) may thus cause a relatively large temperature drop across the electrolysis stack. Alternatively, when dynamically changing the SRU voltage and current, the temperature distribution in the stack may also gradually change due to variation of reaction and Joule heat production. The resulting uneven heat distribution introduces thermo-mechanical stresses, which may lead to loss of contact at the interfaces between the various layers in the stack (typically between stack and bipolar interconnect plates).

C. Graves et al., Nature Materials 2015, 14, 239-244, discloses in conjunction with a single steam electrolysis cell that reversibly cycling between the electrolysis and fuel cell operation by reversing the current periodically leads to a more stable cell voltage and extended lifetime of the cell. However, that beneficial effect was observed in a test of a single cell mounted in an externally-heated near-isothermal enclosure. Dynamic operation of larger stacks result in much larger temperature variations which can induce high degradation rates due to the thermal stresses, overshadowing that beneficial effect ("Solid oxide electrolysis for grid balancing", Final Report for Energinet.dk, project no. 2013-1-12013, Fig. 27. Pp. 35).

In view of the above problems, WO 2020/201485 A1 proposes operating one or more electrolysis cell(s) by providing one or more voltage variations to the electrolysis cell(s) by at least one power electronic unit, wherein the voltage variation(s) are configured such that near-thermoneutral operation at part load is enabled by matching the integral Joule heat production with the integral reaction heat consumption inside said cell(s). Said method enables the provision of a low-cost electrolysis system which simultaneously allows for fast-response dynamic operation, improved electrolysis efficiency, increased lifetime and high impurity tolerance.

However, a power supply configuration which enables efficient and stable operation of multiple electrolysis stacks in a MW-scale plant under these conditions is not disclosed.

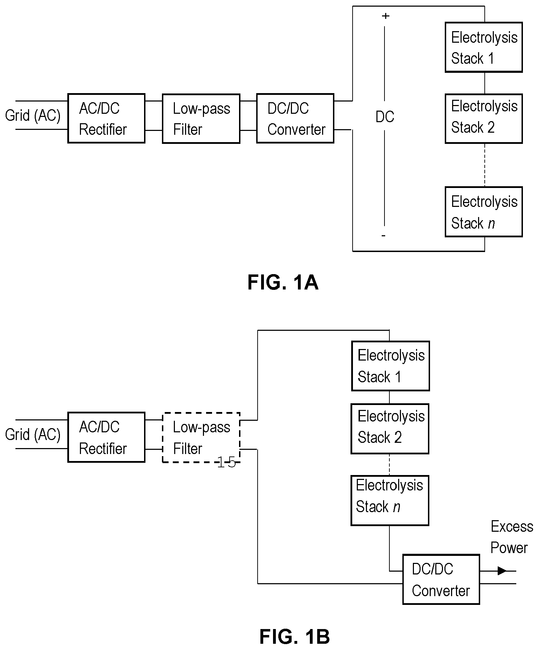

In general, the supply of electrical DC power required for electrolysis operation involves two stages, i.e. the conversion of the mains AC voltage into a (quasi-)DC voltage, and adaptation of the latter voltage to desired DC load voltage level with a DC-DC converter which may be optionally galvanically isolated. Between these two stages, low-pass filters (typically LC filters consisting of an inductor and a capacitor) are commonly inserted in order to reduce ripples in the DC input voltage, to smoothen the AC mains current and to attenuate noise originating from electromagnetic interference. A common approach to powering electrolyzer stacks accordingly is illustrated in Fig. 1A, wherein the DC/DC conversion stage is coupled in parallel to the loads, i.e. the electrolyzer stacks. Such configurations may also comprise converters connected to the same load which use phase shift control, such as three-phase interleaved buck converters as disclosed in B. Yodwong et al., Electronics 2020, 9, 912, for example.

As the filter stage and especially the capacitors used for substantially contribute to the costs and complexity of the power supply system and are often prone to failure during long-term operation, however, efforts have been made to omit the necessity for capacitors in the filter stage. To this end, EP 2 963 761 A1 proposes an AC-DC-electrical power converting unit configuration according to Fig. 1B, wherein the electrolyzer stacks and the power converters are coupled in series such that the same current flows through the input of the electrolyzer stack and to the power converters, and wherein the input power to the series of loads and converters is provided by the output of the AC-to-DC rectifiers. While in this configuration, the voltage ripples on the loads are advantageously removed by the converters operating as active filters, it is not suitable for effective dynamic, near-thermoneutral operation at part load by matching the integral Joule heat production with the integral reaction heat consumption inside the electrolyzer stacks.

US 2017/0005357 A1 discloses a grid-tied power distribution system for reversible solid oxide fuel cell stacks, which incorporates bi-directional AC-DC converters to provide or draw power from the fuel cell system, but does not mention the above-identified problems. WO 2018/033948 A1 discloses a hydrogen production system equipped with an electrolytic cell stack, a power source supplying constant current to the stack and a temperature control mechanism configured to control the temperature of the cell stack in order for the generated voltage to attain a previously set target voltage. However, WO 2018/033948 A1 does not disclose or suggest a parallel arrangement of multiple DC/DC converter modules.

In view of the above, there still exists a need to provide a simple and inexpensive power supply which simultaneously enables fast-response dynamic operation of large-scale electrolyzer plants comprising a large number of electrolysis stacks, and which has a long lifetime.

## SUMMARY OF THE INVENTION

The present invention solves these objects with the subject matter of the claims as defined herein. Further advantages of the present invention will be further explained in detail in the section below.

In general, the present invention relates to a power converter system for a plurality of electrolysis cell stack units, comprising: a parallel arrangement of multiple DC/DC converter modules; wherein each DC/DC converter module is configured to power a single electrolysis cell stack unit; and wherein each DC/DC converter module is capable of supplying said electrolysis cell stack unit with a predetermined variation of current, power and/or voltage such that near-thermoneutral operation at part load is enabled by matching the integral Joule heat production with the integral reaction heat consumption inside said electolysis cell stack unit, and/or wherein each DC/DC converter module is capable of reversing the current supplied to said electrolysis cell stack unit, causing said electrolysis cell stack unit to perform in fuel cell mode.

In a further embodiment, the present invention provides a power distribution system for a plurality of electrolysis cell stack units, comprising: a common bus comprising: a transformer, one or more rectifier(s), and an optional input filter; and the aforementioned power converter system connected to the common bus.

In another embodiment, the present invention relates to an electrolysis power plant comprising the aforementioned power distribution system and a plurality of electrolysis cell stack units.

In another embodiment, the present invention relates to a method of distributing power to a plurality of electrolysis cell stack units, comprising: coupling a common bus comprising a transformer, one or more rectifier(s), and an input filter, between a power grid and a plurality of DC/DC converter modules arranged in parallel; connecting each DC/DC converter module to a separate electrolysis cell stack unit; and independently supplying one or a fraction of the electrolysis cell stack units via DC/DC converter module with a predetermined variation of current, power and/or voltage such that near-thermoneutral operation at part load is enabled by matching the integral Joule heat production with the integral reaction heat consumption inside the electolysis cell stack unit, and/or independently reversing the current supplied to one or a fraction of the plurality of electrolysis cell stack units via DC/DC converter(s), causing said electrolysis cell stack unit(s) to perform in fuel cell mode.

Advantageously, the present invention enables efficient, inexpensive and effective power management for large-scale electrolysis plants by connecting the DC/DC converters to multiple loads (i.e. electrolyzer stacks) and enabling load shift coordination between these multiple loads to provide for a constant DC-link voltage and simultaneously near-thermoneutral operation of the electrolyzer stacks and/or high degradation resistance.

Preferred embodiments of the system for operating one or more electrolysis cell(s) and the related method, as well as other aspects of the present invention are described in the following description and the claims.

## BRIEF DESCRIPTION OF THE DRAWINGS

FIG. 1A: Prior art power distribution system comprising an AC/DC conversion stage and DC/DC conversion stage coupled in parallel to the loads, i.e. the electrolyzer stacks.

FIG. 1B: Prior art power distribution system, wherein the electrolyzer stacks and the power converters are coupled in series.

FIG. 2: System overview of transformer, rectifier, input filter, modules and storage tanks for the electrolysis products.

FIG. 3: System diagram illustrating a single module consisting of N units, each unit consisting of N converters and N electrolysis stacks.

FIG. 4: Equivalent electrical circuit model for one stack consisting of 75 series-connected cells.

FIG. 5: Characterization of electrolysis stack based on a Thevenin model. Maximum current, voltage and power are indicated by a star.

FIG. 6: Currents at 5%, 35%, 65% and 95% rated power for thermal equilibrium. Calculations performed for $H_2O$ electrolysis, i.e. K = -0.3 V per cell.

FIG. 7: Cell voltages at 5%, 35%, 65% and 95% nominal power for thermal equilibrium. Calculations performed for $H_2O$ electrolysis, i.e. K = -0.3 V per cell.

FIG. 8: Joule and reaction heat for the 'a' and 'b' intervals. Calculations performed for $CO_2$ electrolysis, i.e K = -0.5 V per cell

FIG. 9: Top row: Immediate (continuous line) and average (dashed line) modular current for two (far left), three, four, five, and six (far right) units, respectively. The following rows: Unit flows. The vertical black dotted lines indicate the period time. The figure is shown for units operating in fuel cell mode 20% of the time.

FIG. 10: Current in units and module for five units at different duty cycles for N = 5 units. IEb = -0.5IEa.

FIG. 11: Maximum, mean and minimum modulus current for N = 5 units at different duty cycles.

FIG. 12: LTSpice simulation model

FIG. 13: DC-link capacitor voltage (gray curve), current through LC filter inductor (upper black curve) and input current to one converter (lower black curve) for duty-cycle 0.75 (top), 0.80 (middle) and 0.85 (bottom).

## DETAILED DESCRIPTION OF THE INVENTION

For a more complete understanding of the present invention, reference is now made to the following description of the illustrative embodiments thereof:

Power Converter System

In a first embodiment, the present invention relates to a power converter system for a plurality of electrolysis cell stack units, comprising: a parallel arrangement of multiple DC/DC converter modules; wherein each DC/DC converter module is configured to power a single electrolysis cell stack unit; and wherein each DC/DC converter module is capable of supplying said electrolysis cell stack unit with a predetermined variation of current, power and/or voltage such that near-thermoneutral operation at part load is enabled by matching the integral Joule heat production with the integral reaction heat consumption inside the electolysis cell stack unit, and/or wherein each DC/DC converter module is capable of reversing the current supplied to said electrolysis cell stack unit, causing said electrolysis cell stack unit to perform in fuel cell mode.

In this context, "multiple" denotes a plurality of DC/DC converter modules. The specific number of DC/DC converter modules is not particularly limited and preferably corresponds to the number of electrolysis cell stack units to which power is to be supplied. Typically, the number of converter modules will range from 2 to 100, such as from 3 to 50.

In practice, electrolysis systems typically operate at conditions that are neither fully isothermal nor fully adiabatic. The term "near-thermoneutral operation", as used herein, denotes electrolysis operation where the absolute value of the difference between the integrated Joule heat production and the integrated reaction heat consumption (both integrated over a period of more than 3600 seconds) is less than the absolute value of the integrated heat consumption or the absolute value of the integrated heat production, or both.

In preferred embodiments, "near-thermoneutral operation" is understood as electrothermal balanced operation, which uses electric (Joule) heat to balance the required reaction heat and can be distinguished from conventional thermal balanced operation where the thermal capacity of excess air flow is used limit temperature variations in electrolysis cells and stacks. As a side benefit of the present invention, the need to blow hot air through the stack(s) is reduced. In addition, the impurity tolerance can be improved, which reduces the requirement for gas purification. Both side benefits substantially reduce the overall cost of the system.

The expression "part load" denotes a condition, wherein the electrolysis stack operates at less than 100% of its maximum power, such as 99.9% or less and preferably 0.1% or more.

The term "variation", as used herein, denotes a predetermined variation of the cell current, power and/or voltage, which may be applied in the form of a periodical variation which recurs in predefined intervals. From the viewpoint of reducing mechanical tension, the duration of each variation, i.e. the duration of a deviation from the normal operational value of current, power and/or voltage, is preferably set to a range of from 1 $\mu$s to 1000 s, further preferably from 1 $\mu$s to 100 s. By operating the electrolysis system accordingly, the duration of each variation is so short that the temperature change in the fluid (e.g. gas) and the cells and stack is negligible. In this way, accumulation of mechanical tension at the weak interfaces in the stack can be avoided, making it possible to achieve the increased lifetimes enabled by reversible operation. In further preferred embodiments, the frequency of the variation(s) is in the range of from 10 mHz to 100 kHz. Further preferred is a frequency the range of from 10 mHz to less than 20 kHz, while frequencies of from 20 mHz to 10 kHz are especially preferred. Notably, the present invention is different from converters which use phase shift control, as the latter are connected to the same load and their time shift is limited by the switching frequency (usually more than 20 kHz).

The shape of the variation is not particularly limited. However, variations comprising sine-wave shaped and/or square-wave shaped variation profiles are preferable. Symmetrical and especially asymmetrical square-wave shaped variations are typically most effective and practicable, while smooth sine-shaped variations may be preferable to minimize stray inductance and eddy currents in the SRU. Combining sine-shaped and the square-shaped variations may also be preferred to minimize peak voltages and to avoid erroneous operation conditions related to induction phenomena.

In principle, any of current, power and/or voltage may be modulated to enable near-thermoneutral operation at part load. However, from the viewpoint of practicality, a predetermined variation of voltage is especially preferred. In this context, the range of the voltage variation(s) is typically between 0.2 V and 2.0 V, especially preferably between 0.5 V and 1.9 V.

According to the present invention, by connecting each of the multiplicity of DC/DC converter modules present in parallel arrangement to a single electrolysis cell stack unit, the dynamic near-thermoneutral operation of each electrolysis cell stack unit may not only be controlled separately but also effectively coordinated between the electrolysis cell stack units. By coordinating the shift between the multiple loads (i.e. electrolysis cell stack units), it is in turn advantageously possible to obtain a constant, smooth DC-link voltage without the necessity of expensive (large) filter capacitors which potentially limit the lifetime of the power supply system, while still maintaining near-thermoneutral operation of each electrolysis cell stack and the advantages associated therewith. Accordingly, all electrolysis cell stack units may be operated at their optimum performance.

In general, it may be preferred that the predetermined variations are configured to effect volatilization, desorption or dissolution of side reaction compounds adsorbed, precipitated or otherwise formed in the electrodes of the cell(s), e.g. by increasing the oxidation state (oxidation) or decreasing the oxidation state (reduction) of said side reaction compounds, which leads to degradation decrease, more stable cell voltage and extended lifetime of the cells. While not being limited thereto as long as their formation is reversible, such side reaction compounds may be undesired intermediates or originate from impurities in the reactant (e.g., hydroxides formed by alkaline earth metals, hydrocarbons, sulphur-based compounds, formaldehyde, formic acid ammonia, halogenated compounds) or from electrolysis cell materials (e.g., Si-based impurities from glass components).

Particularly efficient reduction of degradation due to desorption or dissolution of side reaction compounds may be achieved by reversing the current supplied to the electrolysis cell stack unit to effect fuel cell operation of said electrolysis cell stack unit. According to the present invention, the current reversal may be carried out independently from the above-defined predetermined variation, i.e. in alternative to the modulation of current, power and/voltage, or in addition thereto (e.g. during either a fraction of or during the entire predetermined variation of voltage and/or power). Therefore, a "predetermined variation" of current which includes a current reversal need not be necessarily directed to near-thermoneutral operation as long as it effects a dissolution or desorption of undesired intermediates, impurities or other compounds formed by reversible reactions and responsible for the degradation of the electrolytic performance.

As one example of desorption of undesired intermediates, impurities or other compounds, the desorption of sulphur and $SiO_2$ from the Ni surface of Ni/YSZ-electrodes observed in $H_2O$ and $CO_2$ electrolysis may be mentioned. In high-temperature electrolysis of $CO_2$, periodical current reversal also enables desorption of carbon at the reaction sites and thus advantageously also leads to a faster $CO_2$ reduction. However, the advantageous effects are not limited to these specific species, but in principle extend to all reversible side reaction mechanisms which may impede the performance of the electrolytic cell.

Notably, the DC/DC converter module is preferably configured to apply the current reversal periodically, with a preferable frequency in the range of from 10 mHz to 100 kHz, more preferably from 10 mHz to less than 20 kHz, while frequencies of from 20 mHz to 10 kHz are especially preferred. In analogy to the predetermined variation of current, power and/or voltage described above, the duration of current reversal is preferably set to a range of from 1 $\mu$s to 1000 s, further preferably from 1 $\mu$s to 100 s. In this context, the current modulation may comprise sine-wave shaped and/or square-wave shaped current variation profiles, for example.

In preferred embodiments, each DC/DC converter module may thus further comprise one or more electronic switches configured to reverse the current supplied to the electrolysis cell stack unit. Suitable electronic switches may be selected from by the skilled artisan known electronic or electromechanical switches useful in power converters. Advantageously, this process may reduce damages to the electrode microstructure and/or effect desorption or dissolution of side reaction compounds adsorbed, precipitated or otherwise formed in the electrodes of the cell(s). Furthermore, during the fraction of time where the current is reversed, not all the products from the integral electrochemical reaction which still reside inside the cell(s) are converted back to reactants. Therefore there is no need to change the fluid (e.g. gas) composition, as opposed to conventional (DC voltage) operation. By enabling reverse current operation (wherein stacks act as sources) for a short time, constant DC-link voltage operation may be ensured. Without the load coordination, it would have been necessary to add an energy storage device, e.g. battery or supercapacitor, to handle stacks acting like sources for a short time, inevitably resulting in increased cost and complexity.

The Joule heat due to the necessary overpotential and current is positive in both fuel cell and electrolysis mode. In high-temperature electrolysis, near-thermoneutral operation at an operating voltage below $E_{tn}$ is desirable for optimal performance. For operating voltages between OCV and $E_{tn}$, near-thermoneutral operation requires heat addition during the electrolysis process. In such a system, heat addition is further necessary to reduce tensile stress at the interconnect/cell interface, which potentially leads to delamination and loss of contact, poor performance and degradation. Conventionally, heat is supplied through the use of a heated sweep gas or active heating devices, for example. In contrast, in the present invention, the Joule heat is balanced with the reaction heat (plus heat loss to surroundings) by supplying the electrolysis stacks with one or more variations of current, power and/or voltage via the DC/DC converter module. Thus, the electrolysis stack units can be operated near-thermoneutrally with no need for external heating sources.

In preferred embodiments of the power converter system, only one or a fraction of the DC/DC converter modules simultaneously supply the predetermined variation of current, power and/or voltage.

Especially preferably, the power converter system further comprises a control unit connected to each of the DC/DC converter modules and configured to coordinate the predetermined variation of current, power and/or voltage in the DC/DC converter modules in an alternating manner. Hence, the application of the predetermined variation cycles between one or a subset of the DC/DC converter modules (also referred to as "duty cycle" in the following).

In a further preferred embodiment, the control unit may be configured to coordinate the predetermined variation in one or more DC/DC converter modules so that, during the predetermined variation, the common DC-link voltage remains essentially constant. This may be accomplished by suitably adjusting the amplitude, duration and/or frequency of the variation of current, power and/or voltage for each individual module or subset of modules, as well as the duty cycle distribution between the modules or subsets of modules. The control unit may comprise a plurality of electronic switches and synchronization means (e.g. a distributed clock signal).

Means for providing the desired variation of current, power and/or voltage may be selected by the skilled artisan from known components. In a preferred embodiment according to the present invention, the power converter system comprises a pulse width modulation (PWM) circuit, optionally in combination with a motor controller, to provide a predetermined voltage variation. Such components may be integrated into the individual DC/DC converter modules or into a common circuit, provided that an independent operation in parallel arrangement is still possible.

In another preferred embodiment, the power converter system according to the present invention further comprises one or more sensors configured to acquire physical data related to an electrolysis cell unit, and a PID (proportional-integral-derivative) controller configured to control the variation of current, power and/or voltage based on measurements of the acquired sensor data. The PID controller may be configured to continuously calculate an error value as the difference between a desired data setpoint and the measured sensor data, enabling the power conversion module to apply a correction of the variations of current, power and/or voltage based on proportional, integral, and derivative terms. Target parameters for sensor data may comprise temperature (e.g. inlet and outlet temperature of the fluid (gas or liquid) sent to and from the electrolysis cell(s) or the stack or by measurements of the temperature directly in the cell compartments), gas pressure, gas concentration, impedance, resistance and current, for example.

In further preferred embodiments, the PID controller may be configured to control the variation of current, power and/or voltage based on the dynamic current/voltage response of the electrolysis cell stack or unit.

In an especially preferred embodiment, the power converter system comprises as a sensor a Laplace transform impedance spectrometer configured to measure a frequency domain impedance spectrum of an electrolysis cell, stack or unit (e. g. by a current pulse method or voltage pulse method), in order to provide an information on the health, temperature and performance of the individual electrolysis cell, stack or unit, which may be then optionally fed into the PID device to control the variations of current (including current reversal), power and/or voltage.

In order to achieve a constant modular current, the power converter system preferably satisfies the following equation (Eq. 1):

$$n_c = n_e = x \cdot \frac{T_p}{T_b} \qquad \text{(Eq. 1)}$$

with $n_c$ representing the total number of DC/DC converter modules, $n_e$ representing the total number of electrolysis cell stack units, $T_p$ representing the power-on time of the electrolysis cell stack units, $x$ being an integer equal to or greater than 1, and $T_b$ representing the duration of the predetermined variation applied by one of the DC/DC converter modules.

The inverse value of $\frac{T_p}{T_b}$ corresponds to the duty cycle of the electrolysis stack unit, i.e. the duration of the variation supplied by a single DC/DC converter module in relation to the total operational period of all electrolysis stack units. To meet these requirements, the optimum number of electrolysis stack units may be selected based on a predetermined duty cycle, or alternatively, the duty cycle may be adjusted in dependence of the number of available electrolysis stack units, for example.

The expression "electrolysis cell stack unit", as used herein, denotes one electrolysis cell stacks or an assembly of multiple electrolysis cell stacks. As will be known to the skilled artisan, the latter may be connected in series and/or in parallel depending on the desired performance.

The electrolysis cells forming each cell stack are not particularly limited, but the invention is most effective for high-temperature electrolysis cells, such as those configured to operate above 120°C, such as 200°C to 1100°C, or 650°C to 1000°C, for example. Preferred examples thereof include, but are not limited to solid oxide electrolysis/fuel cells (SOEC/SOFC), molten carbonate electrolysis/fuel cells (MCEC/MCFC), high temperature and pressure alkaline electrolysis/fuel cells, and ceramic electrolyte proton conducting electrolysis/fuel cells (PCEC/PCFC).

The reactant materials are not particularly limited. In preferred embodiments, the electrolysis cells forming the stack and stack units perform electrolysis of $H_2O$, $CO_2$, or co-electrolysis of $H_2O$ and $CO_2$.

Details pertaining to materials and construction techniques for electrolysis cells are well-known to the skilled artisan and will not be described herein.

It will be understood that the term "electrolysis cell", as used herein, also encompasses reversible fuel cells, such as reversible solid oxide fuel cells (RSOFCs), for example. In such embodiments, it is preferred that the power converter stages are bi-directional.

Power Distribution System

In a second embodiment, the present invention relates to a power distribution system for a plurality of electrolysis cell stack units, comprising: a common bus comprising: a transformer, one or more rectifier(s), and an optional input filter; and a power converter system according to the first embodiment, which is connected to the common bus. The power distrubution system thus enables distribution of voltage to the power converter system and thus to the electrolysis stack units from a single AC grid source.

The expression "connected", as used herein, means electrically connected.

Since the electrolysis units need to be supplied with DC voltages, the main purpose of the common bus is to convert AC voltage from the power grid to (quasi-)DC voltage.

Specifically, the voltage is scaled down by the transformer before being rectified through the one or more rectifiers. For this purpose, the transformer may be suitably adopted by the skilled artisan depending on the distribution grid voltage and the voltage fed into the rectifying stage.

Rectification may be brought about with active or passive rectifiers. While not being limited thereto, examples of passive rectifiers include thyristor-based and diode-based rectifiers, and examples of active rectifiers include actively controlled switching elements with diode function, such as a bipolar junction transistor (BJT), a metal oxide semiconductor field effect transistor (MOSFET), an insulated gate bipolar transistor (IGBT) and a silicon-controlled rectifier (SCR). Active rectifiers typically allow for smaller losses, but are also more expensive. By enabling bi-directional current flow, they also have the ability to send energy back to the grid, but this functionality is not necessarily required for the electrolysis plant. Under these circumstances, it may be preferable to select the one or more rectifiers from inexpensive passive rectifiers. The rectifier may be a 1-phase or 3-phase rectifier (e.g. 6-pulse or 12-pulse diode bridge rectifier), for example.

The optional input filter, commonly consisting of an inductor and one or more capacitors (i.e. an LC filter), enables smoothing of the voltage ripple, which is normally important for optimizing the specific energy consumption and reliability of electrolysis stacks. Advantageously, the present invention does not require large capacitors or no capacitors as input filters at all, since ripple effects are minimized by coordinating the switching between loads so as to ensure constant DC link voltage. If implemented, the total capacitance inserted between the rectification stage and the power converter system(s) is preferably lower than 5000 $\mu$F, more preferably lower than 1000 $\mu$F, and especially preferably lower than 500 $\mu$F.

The power distribution system may comprise further subsystems, including circuit breakersensors and master controller devices (including microprocessors having a processor and system memory) which may be coupled to a computer terminal. These subsystems may be suitably implemented in the common bus or in the connected DC/DC power converter system.

Electrolysis Power Plant

In a third embodiment, the present invention relates to an electrolysis power plant comprising the power distribution system according to the second embodiment and a plurality of electrolysis cell stack units.

As has been mentioned above, the electrolysis cell stack units each preferably comprise one or more stacks of solid oxide electrolysis/fuel cells (SOEC/SOFC), molten carbonate electrolysis/fuel cells (MCEC/MCFC), high temperature and pressure alkaline electrolysis/fuel cells, and ceramic electrolyte proton conducting electrolysis/fuel cells (PCEC/PCFC).

In preferred embodiments, the electrolysis power plant has a total electrical input power of 1 MW or more. Of course, it must be ensured that AC grid voltage selected is appropriate for the load. For instance, a 10 kV network is sufficient for a load of 1 MW.

Method for Power Distribution

In a fourth embodiment, the present invention relates to a method of distributing power to a plurality of electrolysis cell stack units, comprising: coupling a common bus comprising a transformer, one or more rectifier(s), and an input filter, between a power grid and a plurality of DC/DC converter modules arranged in parallel; connecting each DC/DC converter module to a separate electrolysis cell stack unit; and independently supplying one or a fraction of the plurality of the electrolysis cell stack units via DC/DC converter module(s) with a predetermined variation of current, power and/or voltage such that near-thermoneutral operation at part load is enabled by matching the integral Joule heat production with the integral reaction heat consumption inside the electolysis cell stack unit, and/or independently reversing the current supplied to one or a fraction of the plurality of electrolysis cell stack units via DC/DC converter module(s), causing said electrolysis cell stack unit(s) to operate in fuel cell mode.

Preferably, only one or a fraction of the DC/DC converter modules simultaneously applies the predetermined variation of current, power and/or voltage.

The term "fraction" as used herein, denotes a number larger than 1 and smaller than the total number of units in the plurality of the electrolysis stack units. In preferred embodiments, the ratio of electrolysis stack units to which the current reversal is applied (i.e. stack units in fuel cell mode) or to which the predetermined variation of current, power and/or voltage is applied, respectively, relative to the total number of electrolysis stack units, is in the range of from 1 to 45%, more preferably in the range of from 1 to 40%.

In preferred embodiment, the method according to the present invention comprises acquiring physical data related to an electrolysis cell unit, and controlling the current reversal and/or the predetermined variation of current, power and/or voltage based on measurements of the acquired physical data, e. g. by using one or more sensors (temperature sensors, lambda sensors etc.) in combination with a PID (proportional-integral-derivative) controller.

In a further preferred embodiment, which advantageously allows for a simple integration into the present method and enables effective control based on the dynamic current/voltage response, the method comprises measuring a frequency domain impedance spectrum of an electrolysis cell, stack or unit (e. g. by a current pulse method or voltage pulse method) via Laplace transform impedance spectrometry, in order to provide an information on the health, temperature and performance of the individual electrolysis cell, stack or unit, which may be then optionally fed into the PID device to control the current reversal or the variations of current, power and/or voltage. Suitable methods for determining frequency domain impedance are disclosed in US 2003/0065461 A1, for example. It will be understood that the preferred features of the first to fourth embodiments may be freely combined in any combination, except for combinations where at least some of the features are mutually exclusive.

**EXAMPLE**

In the following, exemplary embodiments of the present invention and related considerations will be described in further detail. However, it is understood that the present invention is not limited thereto.

Stack Characteristics

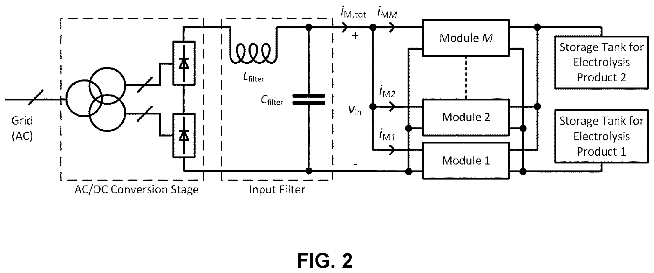

An exemplary electrolysis plant according to the present invention is illustrated in Fig. 2, which depicts the connection of the common bus including a transformer, rectifier and input filter to a plurality of modules (number of modules = $M$) in parallel arrangement, wherein each of the modules consist of a single unit or a combination of units, with each unit consisting of a power converter system and an electrolysis stack unit connected to the power converter system. The total number of modules $M$ depends on whether two series-connected electrolysis stacks are used or not, as well as the total desired power. The total module current is given by the sum of the individual modules according to the following equation:

$$i_{M,tot} = \sum_{m}^{M} i_{Mm} [A] \qquad \text{(Eq. 2)}$$

Each unit in each module is preferably regulated in such a way that the current to each module is constant, even though the current in each electrolysis stack may vary due to a predetermined variation of voltage and/or power. The number of modules can be simply added so that the desired total power is achieved.

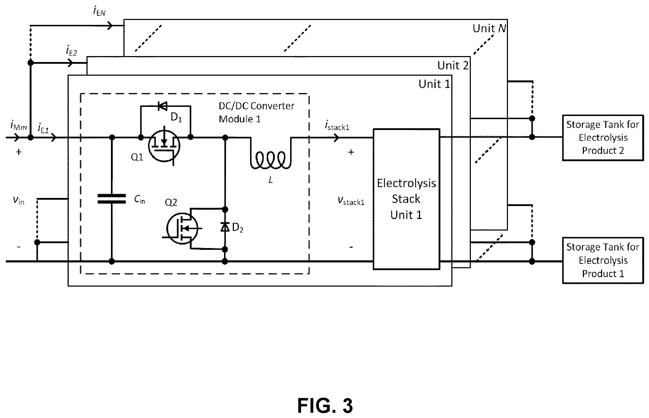

By controlling each stack intelligently, the use of small filter capacitors may be enabled. In this respect, it is especially preferable to reverse the current in one or a fraction of the plurality of the electrolysis stack units, so that the respective fuel cell stack operates in fuel cell mode and can partially supply the stacks operating in electrolysis mode. In combination with this embodiment, it is preferred that the converters are bi-directional. Suitable converters for such a purpose may be of the common buck-boost type. By ensuring that the unidirectional voltage is consistently higher than the voltage on the electrolysis stacks, these converter types can be used exactly as shown in Figure 3. In the illustration, the exemplary converter consists of two switches Q1 and Q2, two diodes D, and $D_2$, an input capacitor $C_{in}$ and an inductor L. The electrolysis mode (buck mode) is switched with Q1 and the fuel cell mode (boost mode) is switched with Q2.

The diagram in Figure 3 should be understood as one of the modules included in Figure 2. One module consists of $N$ units, which in turn consist of $N$ converters and $N$ electrolysis stacks. The current of a given module $i_{Mm}$ is given by the sum of the individual units, that is

$$i_{Mm} = \sum_{n}^{N} i_{En} [A] \qquad \text{(Eq. 3)}$$

For the following considerations, an electrolysis stack consisting of 75 series-connected cells will be considered as starting point.

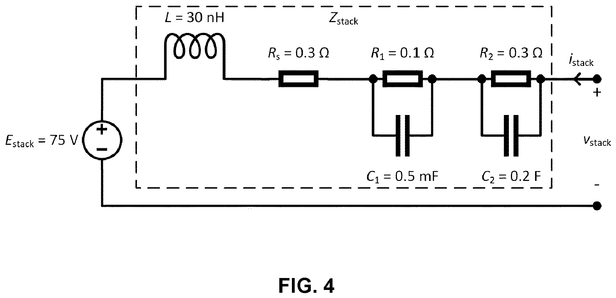

For simplification, the stack will be modeled as a simple Thevenin equivalent consisting of an internal voltage source $E_{stack}$ and an internal impedance $Z_{stack}$, which can be seen in Figure 4. Provided that the current ($I_{stack}$) does not change under constant load, the impedance can be considered as a single resistor equivalent to the sum of the three resistors, i.e.

$$R_{\text{stack}} = R_{\text{s}} + R_1 + R_2 = 0.7 \, \Omega \qquad \text{(Eq. 4)}$$

The voltage $V_{\text{stack}}$ and power $P_{\text{stack}}$ of the stack is in this case:

$$V_{\text{stack}} = E_{\text{stack}} + R_{\text{stack}} \cdot I_{\text{stack}} \qquad \text{(Eq. 5)}$$

$$P_{\text{stack}} = V_{\text{stack}} \cdot I_{\text{stack}} \qquad \text{(Eq. 6)}$$

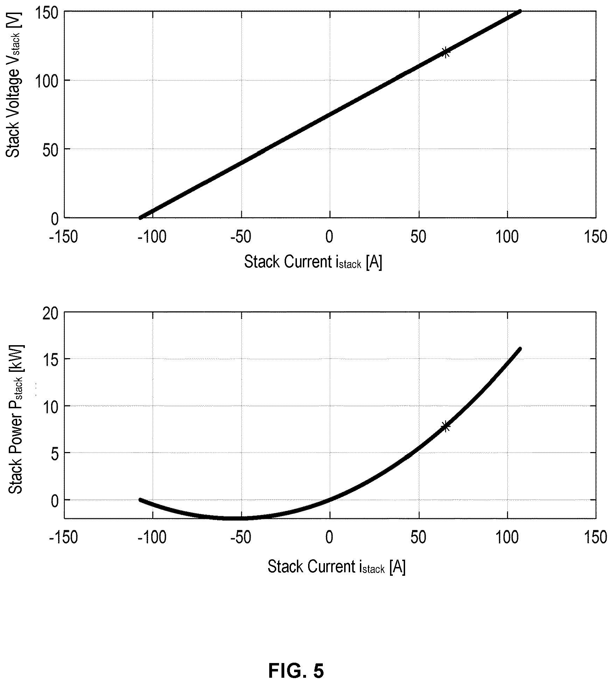

Using Equations 5 and 6 above, the voltage and power characteristics of the stack can be calculated, as is shown in Figure 5. It is seen that the current can also be negative. In that situation, the stack operates in fuel cell mode. In this example, the maximum power $P_{stack, nom} = 7.8$ kW is achieved at $V_{stack} = 120$ V and $I_{stack} = 65$ A.

Thermal equilibrium

Since the stack consists of series-connected cells, the cell current I is equal to the stack current, that is

$$I = I_{\text{stack}}$$

The heat development in the stack consists of joule heat $P_J$ and reaction heat $P_R$, which is given by

$$P_J = R_{\text{stack}}I_{\text{stack}}^2 = R_{\text{stack}}I^2 \qquad\qquad \text{(Eq. 7)}$$

$$P_R = K_{\text{stack}}I_{\text{stack}} = K_{\text{stack}}I \qquad\qquad \text{(Eq. 8)}$$

The coulomb specific heat response per cell is $K = -0.5$ V for $CO_2$ electrolysis and $K = -0.3$ V for $H_2O$ electrolysis. Since the stack consists of $n_{cells} = 75$ series-connected cells, $K_{stack} = -37.5$ V and $K_{stack} = -22.5$ V apply to the two states, respectively. For the system to be in thermal equilibrium, the sum of the Joule heat and the reaction heat must be equal to zero. The current that satisfies this condition is specified as $I_{tlv}$. Accordingly, the following calculations apply:

$$P_J + P_R = 0 \qquad\qquad \text{(Eq. 9)}$$

$$\Updownarrow R_{\text{stack}}I_{\text{tlv}}^2 + K_{\text{stack}}I_{\text{tlv}} = 0$$

$$\Updownarrow I_{\text{tlv}} = \frac{-K_{\text{stack}}}{R_{\text{stack}}} = \begin{cases} 32{,}14 \text{ A}, K = -0{,}3 \\ 53{,}57 \text{ A}, K = -0{,}5 \end{cases}$$

The cell voltage $V_{tlv}$ for thermal equilibrium is given by

$$V_{\text{tlv}} = \frac{(E_{\text{stack}} + R_{\text{stack}}I_{\text{tlv}})}{n_{\text{cells}}} = \begin{cases} 1{,}3 \text{ V}, K = -0{,}3 \\ 1{,}5 \text{ V}, K = -0{,}5 \end{cases} \qquad\qquad \text{(Eq. 10)}$$

The power level of thermal equilibrium at the cellular level is thereby

$$P_{\text{tlv}} = I_{\text{tlv}}V_{\text{tlv}} = \begin{cases} 41{,}79 \text{ W}, K = -0{,}3 \\ 80{,}36 \text{ W}, K = -0{,}5. \end{cases} \qquad\qquad \text{(Eq. 11)}$$

Scaled up to the stack level, the stack power for thermal equilibrium is given by:

$$P_{\text{stack,tlv}} = P_{\text{tlv}}n_{\text{cells}} = \begin{cases} 3{,}13 \text{ kW}, K = -0{,}3 \\ 6{,}03 \text{ kW}, K = -0{,}5. \end{cases} \qquad\qquad \text{(Eq. 12)}$$

The stack effect for thermal equilibrium is thus 59.82% ($K = -0.3$) and 22.7% ($K = -0.5$) less than the maximum stack power.

Maximum power transfer fuel cell condition

When the stack acts as a fuel cell, the power $I_{meo}$ for maximum power transfer is calculated as follows:

$$I_{\text{meo}} = -\frac{E_{\text{stack}}}{2R_{\text{stack}}} = -53{,}57 \text{ A} \qquad\qquad \text{(Eq. 13)}$$

The cell voltage $V_{meo}$ is then given by

$$V_{\text{meo}} = \frac{(E_{\text{stack}} + R_{\text{stack}}I_{\text{meo}})}{n_{\text{cells}}} = 0{,}5 \text{ V} \qquad\qquad \text{(Eq. 14)}$$

Electrical input power

Assumed that, in order to control the temperature in the stack, the system is operated in electrolysis mode for $T_a$ seconds and electrolysis mode/fuel cell mode for $T_b$ seconds, the following equation applies:

$$T = T_a + T_b = \frac{1}{f} \ [s] \qquad\qquad \text{(Eq. 15)}$$

Herein, $T$ [s] is the period time and $f$ [Hz] the frequency of a square-wave shaped signal, respectively. The duty cycle $D_a$ and $D_b$ for the two modes is given by:

$$D_a = \frac{T_a}{T} \ [-] \qquad\qquad \text{(Eq. 16)}$$

$$D_b = \frac{T_b}{T} = \frac{T - T_a}{T} = 1 - D_a \ [-]$$

The electrical mean power of a single stack is then given by:

$$P_{\text{stack}} = \frac{1}{T}\left(V_{\text{stack\_a}}I_aT_a + V_{\text{stack\_b}}I_bT_b\right) = \frac{1}{T}\left(V_{\text{stack\_a}}I_aT_a + V_{\text{stack\_b}}I_b(T - T_a)\right) = V_{\text{stack\_a}}I_aD_a +$$

$$V_{\text{stack\_b}}I_b(1 - D_a) = (R_{\text{stack}}I_a + E_{\text{stack}})I_aD_a + (R_{\text{stack}}I_b + E_{\text{stack}})I_b(1 - D_a) =$$

$$(R_{\text{stack}}I_a^2 + E_{\text{stack}}I_a)D_a + \left(R_{\text{stack}}I_b^2 + E_{\text{stack}}I_b\right)(1 - D_a) \qquad\qquad \text{(Eq. 17)}$$

Herein, $V_{stack\_a}$ and $I_a$ represent stack voltage and current in time interval 'a', respectively, and $V_{stack\_b}$ and $I_b$ represent the stack voltage and current in time interval 'b'.

Power balance

The heat development in the stack consists, as mentioned before, of Joule heat $P_J$ and reaction heat $P_R$. Upon division into 'a' and 'b' intervals, one arrives at the following expressions:

$$P_J = P_{J,a} + P_{J,b} \qquad\qquad \text{(Eq. 18)}$$

$$P_R = P_{R,a} + P_{R,b} \qquad\qquad \text{(Eq. 19)}$$

The individual contributions are given by

$$P_{J,a} = \frac{1}{T}\int_T^{T+T_a} R_{\text{stack}}I_a^2 \ \mathrm{dt} = R_{\text{stack}}I_a^2 D_a \qquad\qquad \text{(Eq. 20)}$$

$$P_{J,b} = \frac{1}{T}\int_{T+T_a}^{T+T_a+T_b} R_{\text{stack}}I_b^2 \ \mathrm{dt} = R_{\text{stack}}I_b^2 \frac{T_b}{T} = R_{\text{stack}}I_b^2(1 - D_a) \qquad\qquad \text{(Eq. 21)}$$

$$P_{R,a} = \frac{1}{T}\int_T^{T+T_a} K_{\text{stack}}I_a \ \mathrm{dt} = K_{\text{stack}}I_a D_a \qquad\qquad \text{(Eq. 22)}$$

$$P_{R,b} = \frac{1}{T}\int_{T+T_a}^{T+T_a+T_b} K_{\text{stack}}I_b \ \mathrm{dt} = K_{\text{stack}}I_a \frac{T_b}{T} = K_{\text{stack}}I_a(1 - D_a) \qquad\qquad \text{(Eq. 23)}$$

For the system to be in thermal equilibrium, the sum of the Joule heat and the reaction heat must again be equal to zero. Therefore

$$P_J + P_R = 0 \qquad\qquad \text{(Eq. 18)}$$

$$\Updownarrow R_{\text{stack}}I_a^2 D_a + K_{\text{stack}}I_a D_a + R_{\text{stack}}I_b^2(1 - D_a) + K_{\text{stack}}I_a(1 - D_a) = 0$$

$$\Updownarrow (R_{\text{stack}}I_a^2 + K_{\text{stack}}I_a)D_a + \left(R_{\text{stack}}I_b^2 + K_{\text{stack}}I_b\right)(1 - D_a) = 0.$$

Solution of equation system

The two equations for the stack effect and thermal equilibrium in principle provide two possible solutions. However, since only solutions for positive $I_a$ currents are desired, one solution option remains:

$$I_a = \frac{P_{stack}}{E_{stack} - K_{stack}} + \frac{\sqrt{D_a P_{stack}(K_{stack}^2 - E_{stack}K_{stack} - P_{stack}R_{stack})}}{D_a(E_{stack} - K_{stack})\sqrt{R_{stack}(1 - D_a)}}(1 - D_a) \qquad \text{(Eq. 19)}$$

$$I_b = \frac{P_{stack}}{E_{stack} - K_{stack}} - \frac{\sqrt{D_a P_{stack}(K_{stack}^2 - E_{stack}K_{stack} - P_{stack}R_{stack})}}{(E_{stack} - K_{stack})\sqrt{R_{stack}(1 - D_a)}} \qquad \text{(Eq. 20)}$$

Simulation results

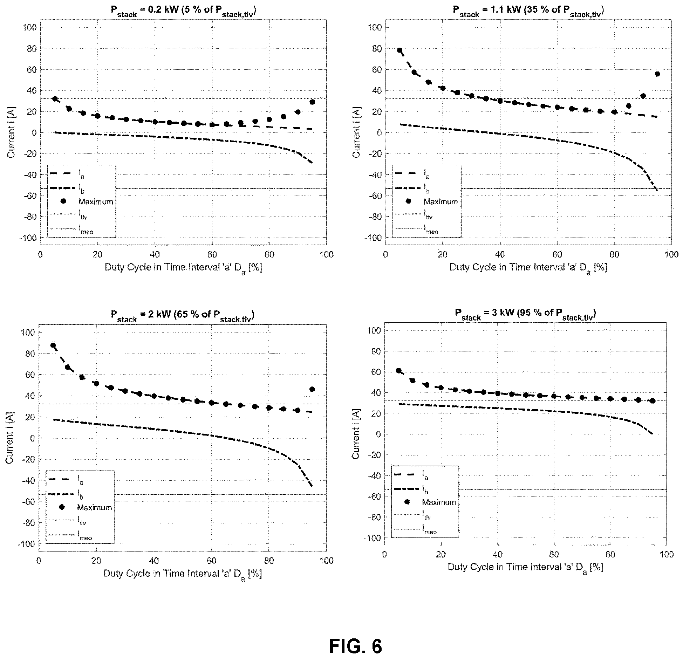

For a given duty cycle, Equations 19 and 20 above can be solved. Figure 6 shows the currents in the two modes as a function of duty cycle for 5%, 35%, 65% and 95% of the rated power for thermal equilibrium, respectively. The maximum absolute value of the two currents as well as the nominal current values for thermal equilibrium and the current for maximum power transfer are also provided in the figure. It is seen that for 5% load, $I_b$ is negative. The larger the duty cycle, the smaller both $I_a$ and $I_b$ become. It is also seen that there is a minimum at $D_a$ = 60% for the maximum absolute value of $I_a$ and $I_b$. For the remaining power levels (35%, 55% and 95%), $I_b$ is positive for the low duty cycles and negative for higher duty cycles.

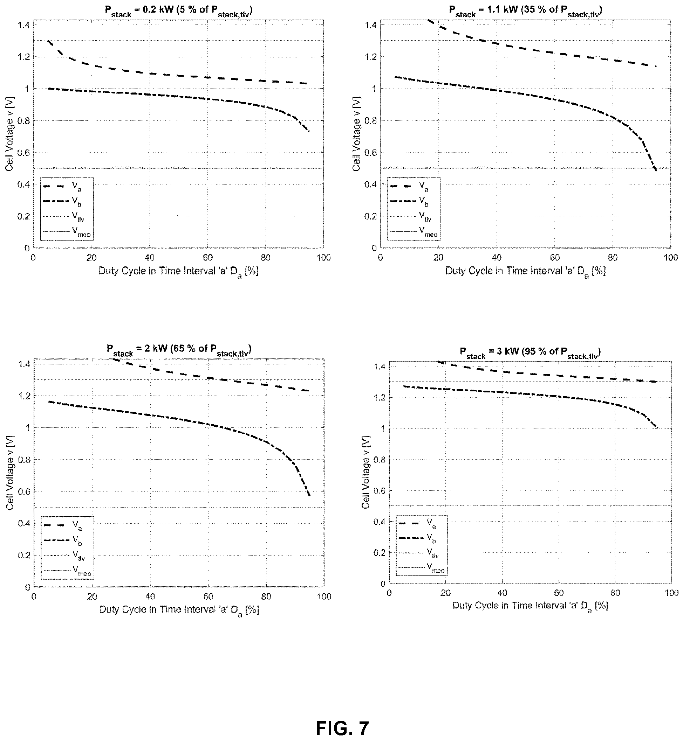

Figure 7 shows the cell voltages for the same effects. It can be seen from both Figure 6 and Figure 7 that the greater the power, the less room there is for the choice of duty cycle, if the nominal current and voltage values for thermal equilibrium are not to be exceeded. It is also seen that for the very large duty cycles about 90% - 95% 'break' the current and voltage in the 'b' interval. The reason for this is that the time interval is so short that the current must necessarily be very large (and hence the voltage very small) in order to maintain the power balance.

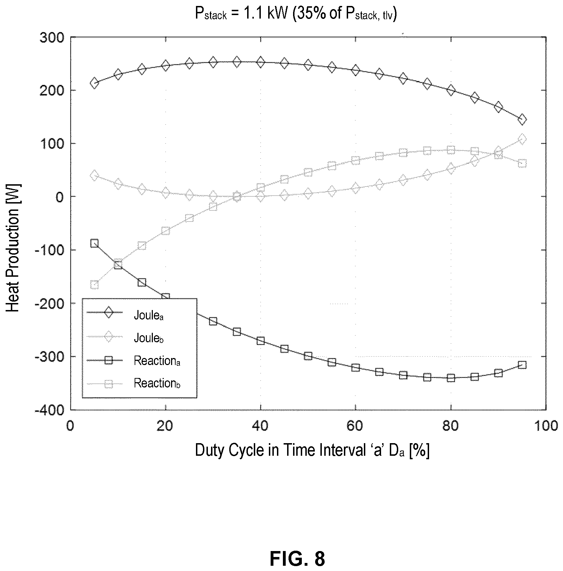

Figure 8 shows the Joule and reaction heat for the two intervals for 35% of the nominal power for thermal equilibrium. It is seen that the greater the duty cycle, the more heat of reaction the system absorbs in the 'a' interval. In order to be able to supply enough heat so that the power balance is observed, it is therefore necessary that the heat of reaction in the 'b' interval goes from negative to positive around $D_a$ = 40%.

Number of units

As mentioned in the requirements specification, each electrolysis stack must be in the electrolysis state for some of the time and the fuel cell or electrolysis state for the remaining time with a frequency of 10 Hz to 100 Hz. In order to make the overall system relatively simple and scalable, it is desired that each module is independent of the others, so that each module must draw a constant current from the DC link (i.e. $di_{Mm} / dt = 0$) for a short period of time. This means that the negative current (fuel cell state) must be managed internally in each module between the N units.

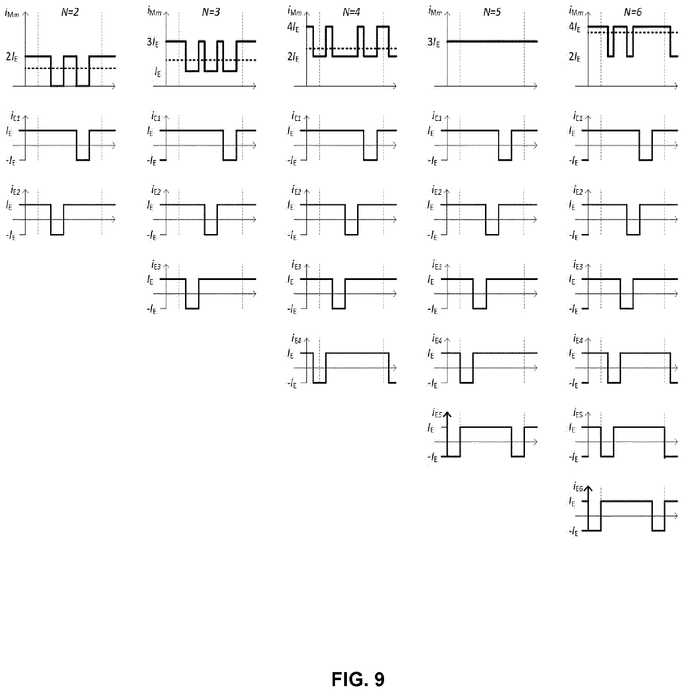

Figure 8 shows a principle drawing of what a module stream may look like, depending on the number of units the module is composed of. In the figure, it is assumed that the current from each unit has the same numerical value $I_E$ regardless of whether the current is positive or negative. This will not necessarily take place in practice, but is merely to illustrate the principle. The actual current levels will depend on both the duty cycle and the efficiency of the converter in the two modes. The duty cycle is also 80%, which means that the stack operates in fuel cell mode 20% of the time. It is seen that for N = 2 units, the current has two levels: $2I_E$ and zero. If the number of units is increased to N = 3, it is possible to raise the minimum level of the module current to a value greater than zero. For N = 4 units, the minimum level is raised further and the maximum level is raised accordingly. For N = 5 units, there is a perfect balance between the number of units and the percentage of time the stacks must operate in fuel cell mode, so the module flow ideally has only one level; namely, the average current. If the number of units is increased to N = 6, the same two levels occur as for N = 4. It should be mentioned, however, that the times when each unit switches from/to fuel cell mode can be selected individually, which is why greater differences can be achieved between the maximum and minimum level than shown in Figure 9. If all the units e.g. operating in fuel cell mode at the same time, the resulting module current will be negative. It is therefore important that there is an appropriate time lag between the devices.

The optimum number of units $N_{opt}$ is obtained by Equation 1. If e.g. the stack operates in fuel cell mode 20% of the time, the optimal number of units is $N_{opt}$ is 5 or all integer multiplications thereof, which is also shown in Figure 9.

Modular current variation

At the optimum number of units (cf. Eq. 1), there will be no current variation for each module. It is examined here what the module current level will be if the optimal number of units cannot be achieved. Each stack has the value $V_a$ and $I_a$ in $T_a$ part of the time and $V_a$ and $I_b$ in $T-T_a$ the rest of the time. The converters also have the efficiencies $\eta_{el}$ and $\eta_{fc}$ in electrolysis and fuel cell mode, respectively. The DC-link voltage $V_{in}$ is fixed. This results in each unit having the following currents in the two intervals:

$$I_{Ea} = \frac{V_{stack\_a}I_a}{\eta_{el}V_{in}} \qquad \text{(Eq. 21)}$$

$$I_{Eb} = \begin{cases} \frac{V_{stack\_b}I_b}{V_{in}}\eta_{fc}, & I_b < 0 \\ \frac{V_{stack\_b}I_b}{\eta_{el}V_{in}} & I_b \geq 0. \end{cases} \qquad \text{(Eq. 22)}$$

The system consists of $N$ units, which are time-shifted evenly with $\Delta T = T/N$ seconds between them. Figure 9 shows the currents in the units and a module for $N = 5$ units at different duty cycles.

It can now be determined how many units there are maximum and will operate in electrolysis and fuel cell mode at the same time, respectively:

$$N_{a,max} = \text{ceil}\left(\frac{T_a}{\Delta T}\right) = \text{ceil}\left(\frac{T_a}{\frac{T}{N}}\right) = \text{ceil}(ND_a) \qquad \text{(Eq. 23)}$$

$$N_{b,max} = \text{ceil}\left(\frac{T_b}{\Delta T}\right) = \text{ceil}\left(\frac{T-T_a}{\frac{T}{N}}\right) = \text{ceil}(N(1-D_a)) \qquad \text{(Eq. 24)}$$

The module current will consist of a maximum ($I_{M,\,max}$) and minimum value ($I_{M,\,min}$):

$$I_{M,max} = N_{a,max}I_{Ea} + (N - N_{a,max})I_{Eb} \qquad \text{(Eq. 25)}$$

$$I_{M,min} = (N - N_{b,max})I_{Ea} + N_{b,max}I_{Eb} \qquad \text{(Eq. 26)}$$

The variation in the module current $\Delta I_M$ is the difference between the maximum and minimum value:

$$\Delta I_M = I_{M,max} - I_{M,min} = \left(N_{a,max} - (N - N_{b,max})\right)I_{Ea} + (N - N_{a,max} - N_{b,max})I_{Eb} \qquad \text{(Eq. 27)}$$

The times $T_{a,\,max}$ and $T_{b,\,max}$ when $N_{a,\,max}$ and $N_{b,\,max}$ stacks operate in electrolysis and fuel cell mode, respectively, is given by:

$$T_{a,max} = T_a - (N_{a,max} - 1)\Delta T = T\left(D_a - (N_{a,max} - 1)\frac{1}{N}\right) \qquad \text{(Eq. 28)}$$

$$T_{b,max} = T_b - (N_{b,max} - 1)\Delta T = T\left((1 - D_a) - (N_{b,max} - 1)\frac{1}{N}\right) \qquad \text{(Eq. 29)}$$

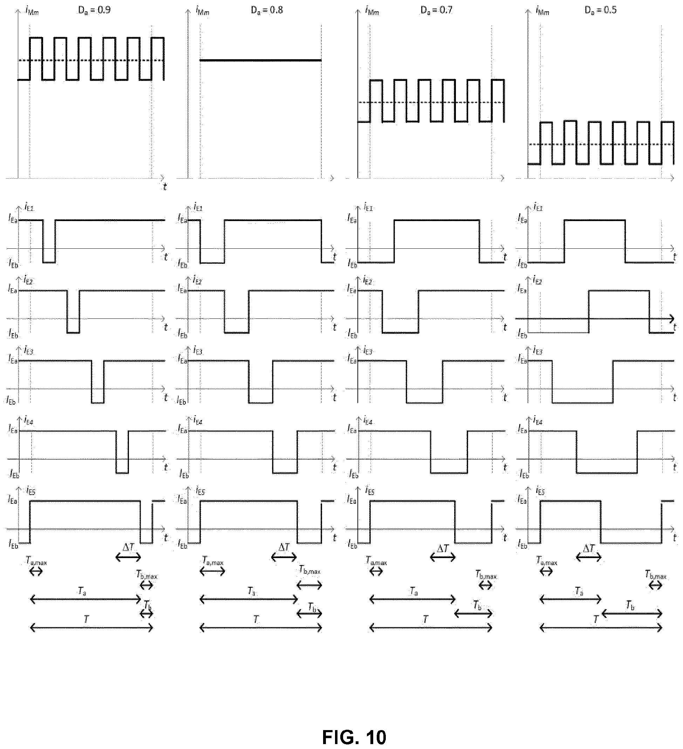

These times are also given in Figure 10. The mean value of the module current is given by:

$$I_{M,av} = \frac{I_{M,max}T_{a,max} + I_{M,min}T_{b,max}}{T_{a,max} + T_{b,max}} \qquad \text{(Eq. 30)}$$

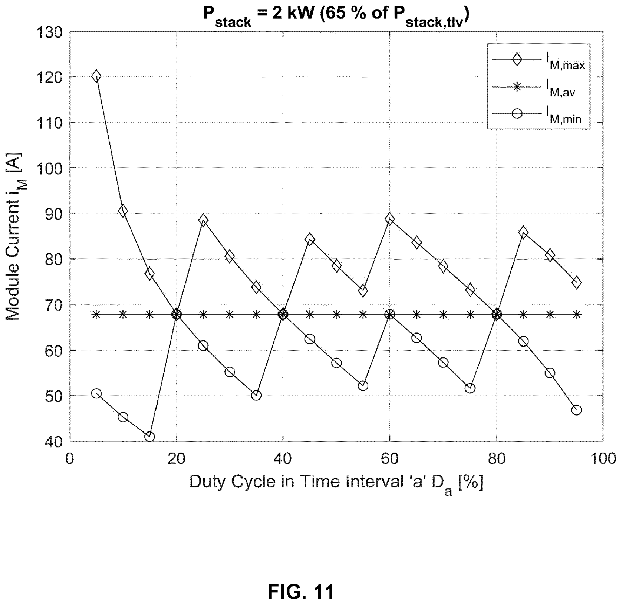

Figure 11 shows how the maximum and minimum module current depends on the duty cycle of a module with $N$ = 5 stacks, each consuming 2 kW electrical power. It is noted that the mean current is independent of the duty cycle as expected.

Verification

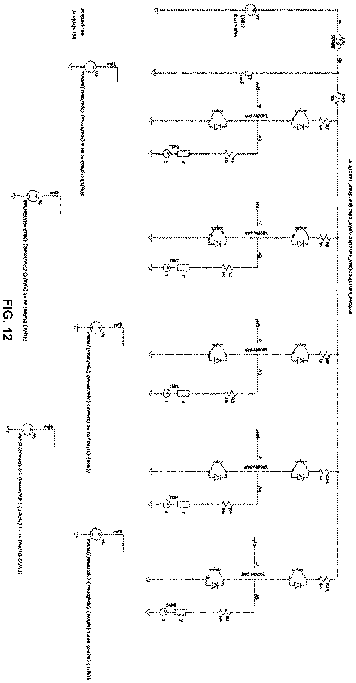

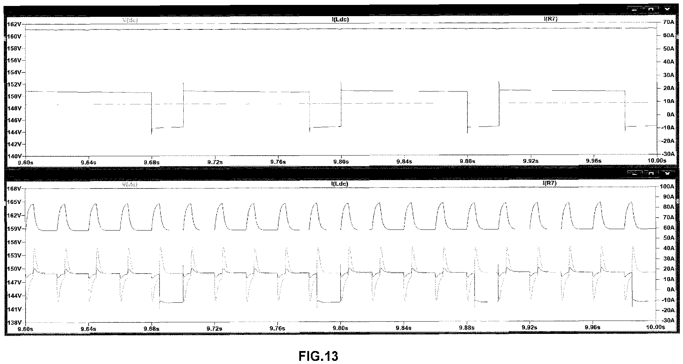

To validate the calculations made for the module currents, an LTSpice model of the system shown in Figure 12 has been established. The model includes a 150 V input voltage source, which should correspond to the (simplified) unidirectional voltage from the transformer, followed by an LC filter and $N$ = 5 converters and electrolysis stacks. To reduce the simulation time, the converters were designed as mean-value models, which means that they do not take into account transient events during each switch period. Figure 13 shows the current in the filter inductor, capacitor voltage and input current to one of the converters for three different duty cycles (0.75, 0.80 and 0.85). It is seen that the maximum and minimum values for the module current correspond to the values in Figure 11. However, there are deviations as the capacitor voltage varies for $D_a$ = 0.75 and $D_a$ = 0.85, which is not taken into account in the theoretical calculations. For $D_a$ = 0.8, there is practically no variation in either the filter inductor current or the voltage, as the number of units ($N$ = 5) in this situation is equal to the optimal number ($N_{opt}$ = 1 / $D_b$ = 1 / 0.2 = 5).

Accordingly, the above results indicate that the present invention enables inexpensive and effective power management for large-scale electrolysis plants by enabling load shift coordination between these multiple loads to provide for a constant DC-link voltage and simultaneously operating the electrolyzer stacks dynamically in a near-thermoneutral regime.

Once given the above disclosure, many other features, modifications, and improvements will become apparent to the skilled artisan within the scope of the claims.

**Claims**

1. A power converter system for a plurality of electrolysis cell stack units, comprising:

   a parallel arrangement of multiple DC/DC converter modules;
   wherein each DC/DC converter module is configured to power a single electrolysis cell stack unit; and
   wherein each DC/DC converter module is capable of supplying said electrolysis cell stack unit with a predetermined variation of current, power and/or voltage such that near-thermoneutral operation at part load is enabled by matching the integral Joule heat production with the integral reaction heat consumption inside said electrolysis cell stack unit, and/or
   wherein each DC/DC converter module is capable of reversing the current supplied to said electrolysis cell stack unit, causing said electrolysis cell stack unit to perform in fuel cell mode.

2. The power converter system according to claim 1, wherein only one or a fraction of the DC/DC converter modules simultaneously apply the predetermined variation of current, power and/or voltage, or the current reversal.

3. The power converter system according to any of claims 1 or 2, wherein each DC/DC converter module further comprises one or more electronic switches configured to reverse the current supplied to the electrolysis cell stack unit, either for a fraction of or during the entire predetermined variation of current, power and/or voltage, resulting in fuel cell operation of the electrolysis cell stack unit.

4. The power converter system according to any of claims 1 to 3, wherein the predetermined variation of current, power and/or voltage or the current reversal is periodical, preferably having a frequency the range of from 10 mHz to less than 20 kHz and/or preferably comprising sine-wave shaped and/or square-wave shaped variation profiles.

5. The power converter system according to any of claims 1 to 4, further comprising a control unit connected to each of the DC/DC converter modules and configured to coordinate the the current reversal or predetermined variation of current, power and/or voltage in the DC/DC converter modules in an alternating manner.

6. The power converter system according to claim 5, wherein the control unit is configured to coordinate the current reversal or the predetermined variation of current, power and/or voltage in one or more DC/DC converter modules so that, during the current reversal or the predetermined variation, the common DC-link current, power and/or voltage remains essentially constant.

7. The power converter system according to any of claims 1 to 6, further comprising a sensor configured to acquire physical information related to an electrolysis cell stack unit, and a PID (proportional-integral-derivative) controller configured to control the current reversal or the variation of current, power and/or voltage based on measurements of the acquired sensor data.

8. The power converter system according to any of claims 1 to 7, wherein the duration of each current reversal or each variation of current, power and/or voltage applied to a single electrolysis cell stack unit is in the range of from 1 $\mu$s to 1000 s.

9. The power converter system according to any of claims 1 to 8, wherein:

$$n_c = n_e = x \cdot \frac{T_p}{T_b}$$

with $n_c$ representing the total number of DC/DC converter modules, $n_e$ representing the total number of electrolysis cell stack units, $T_p$ representing the power-on time of the electrolysis cell stack units, $x$ being an integer equal to or greater than 1, and $T_b$ representing the duration of the current reversal or predetermined variation of current, power and/or voltage applied by one of the DC/DC converter modules.

10. A power distribution system for a plurality of electrolysis cell stack units, comprising:

a common bus comprising:

a transformer,
one or more rectifier(s), and
an input filter; and

a power converter system according to any of claims 1 to 9 connected to the common bus.

11. An electrolysis power plant comprising the power distribution system according to claim 10 and a plurality of electrolysis cell stack units.

12. The electrolysis power plant according to claim 11, wherein the one or more electrolysis cell stack units each comprise one or more stacks of solid oxide electrolysis/fuel cells (SOEC/SOFC), molten carbonate electrolysis/fuel cells (MCEC/MCFC), high temperature and pressure alkaline electrolysis/fuel cells, and ceramic electrolyte proton conducting electrolysis/fuel cells (PCEC/PCFC).

13. The electrolysis power plant according to any of claims 11 or 12, wherein the electrolysis power plant has a total electrical input power of 1 MW or more.

14. A method of distributing power to a plurality of electrolysis cell stack units, comprising:

coupling a common bus comprising a transformer, one or more rectifier(s), and an input filter, between a power grid and a plurality of DC/DC converter modules arranged in parallel;
connecting each DC/DC converter module to a separate electrolysis cell stack unit; and
independently supplying voltage to one or a fraction of the electrolysis cell stack units via DC/DC converter module(s) with a predetermined variation of current, power and/or voltage such that near-thermoneutral operation at part load is enabled by matching the integral Joule heat production with the integral reaction heat consumption inside the electrolysis cell stack unit, and/or
independently reversing the current supplied to one or a fraction of the plurality of electrolysis cell stack units via DC/DC converter module to effect fuel cell operation of said electrolysis cell stack unit(s).

15. The method of distributing power to a plurality of electrolysis cell stack units of claim 14 further comprising a step of acquiring physical data related to one or more electrolysis cell units, and controlling the current reversal and/or the predetermined variation of current, power and/or voltage based on measurements of the acquired physical data, wherein the physical data preferably includes impedance, further preferably Laplace transform impedance.

**Patentansprüche**

1. Ein Leistungswandlersystem für mehrere Elektrolysezellenstapeleinheiten, umfassend:

   eine parallele Anordnung mehrerer DC/DC-Wandlermodule;
   wobei jedes DC/DC-Wandlermodul derart konfiguriert ist, dass es eine einzelne Elektrolysezellenstapeleinheit mit Strom versorgt; und
   wobei jedes DC/DC-Wandlermodul in der Lage ist, die Elektrolysezellenstapeleinheit mit einer vorbestimmten Variation der Stromstärke, Leistung und/oder Spannung zu versorgen, so dass ein nahezu thermoneutraler Betrieb bei Teillast ermöglicht wird, indem die integrale Joulesche Reaktionswärmeproduktion mit dem integralen Reaktioswärmeverbrauch innerhalb der Elektrolysezellenstapeleinheit abgestimmt wird, und/oder
   wobei jedes DC/DC-Wandlermodul in der Lage ist, den der Elektrolysezellenstapeleinheit zugeführten Strom umzukehren, wodurch die Elektrolysezellenstapeleinheit im Brennstoffzellenmodus betrieben wird.

2. Leistungswandlersystem nach Anspruch 1, wobei nur eines oder ein Teil der DC/DC-Wandlermodule die vorgegebene Variation der Stromstärke, Leistung und/oder Spannung oder die Stromumkehr gleichzeitig anwenden.

3. Leistungswandlersystem nach einem der Ansprüche 1 oder 2, wobei jedes DC/DC-Wandlermodul außerdem einen oder mehrere elektronische Schalter umfasst, die derart konfiguriert sind, dass sie den der Elektrolysezellenstapeleinheit zugeführten Strom entweder während der gesamten vorgegebenen Variation der Stromstärke, Leistung und/oder Spannung oder für einen Bruchteil davon umkehren, was zum Brennstoffzellenbetrieb der Elektrolysezellenstapeleinheit führt.

4. Leistungswandlersystem nach einem der Ansprüche 1 bis 3, wobei die vorgegebene Variation der Stromstärke, Leistung und/oder Spannung oder die Stromumkehr periodisch ist und vorzugsweise eine Frequenz im Bereich von 10 MHz bis weniger als 20 kHz aufweist und/oder vorzugsweise sinusförmige und/oder rechteckförmige Variationsprofile umfasst.

5. Leistungswandlersystem nach einem der Ansprüche 1 bis 4, ferner umfassend eine Steuereinheit, die mit jedem der DC/DC-Wandlermodule verbunden und derart konfiguriert ist, dass sie die Stromumkehr oder vorgegebene Variation der Stromstärke, Leistung und/oder Spannung in den DC/DC-Wandlermodulen in abwechselnder Weise koordiniert.

6. Leistungswandlersystem nach Anspruch 5, wobei die Steuereinheit derart ausgelegt ist, dass die Stromumkehr oder die vorgegebene Variation der Stromstärke, Leistung und/oder Spannung in einem oder mehreren DC/DC-Wandlermodulen derart koordiniert wird, dass während der Stromumkehr oder der vorgegebenen Variation der gemeinsame Gleichstrom-Zwischenkreis-Strom, die Leistung und/oder die Spannung im Wesentlichen konstant bleiben.

7. Leistungswandlersystem nach einem der Ansprüche 1 bis 6, ferner umfassend einen Sensor, der derart konfiguriert ist, dass er physikalische Informationen in Bezug auf eine Elektrolysezellenstapeleinheit erfasst, und einen PID-Regler (Proportional-Integral-Derivativ), der derart konfiguriert ist, basierend auf Messungen der erfassten Sensordaten die Stromumkehr oder die Variation der Stromstärke, Leistung und/oder Spannung zu steuern.

8. Leistungswandlersystem nach einem der Ansprüche 1 bis 7, wobei die Dauer jeder Stromumkehr oder jeder Variation der Stromstärke, Leistung und/oder Spannung, die an eine einzelne Elektrolysezellenstapeleinheit angelegt wird, im Bereich von 1 $\mu$s bis 1000 s liegt.

9. Leistungswandlersystem nach einem der Ansprüche 1 bis 8, wobei gilt:

$$n_c = n_e = x \cdot \frac{T_p}{T_b}$$

wobei $n_c$ die Gesamtzahl der DC/DC-Wandlermodule darstellt, $n_e$ die Gesamtzahl der Elektrolysezellenstapeleinheiten darstellt, $T_p$ die Einschaltzeit der Elektrolysezellenstapeleinheiten darstellt, $x$ eine ganze Zahl gleich oder größer als 1 ist, und $T_b$ die Dauer der Stromumkehr oder vorbestimmten Variation der Stromstärke, Leistung und/oder Spannung darstellt, die von einem der DC/DC-Wandlermodule angelegt wird.

**10.** Ein Stromverteilungssystem für mehrere Elektrolysezellenstapeleinheiten, umfassend:

eine gemeinsame Verteilerschiene bestehend aus:

einem Transformator,
einem oder mehreren Gleichrichtern und
ein Eingabefilter; und

einem Leistungswandlersystem nach einem der Ansprüche 1 bis 9, welches an die gemeinsame Verteilerschiene angeschlossen ist.

**11.** Elektrolytische Energieerzeugungsanlage, umfassend das Stromverteilungssystem nach Anspruch 10 und mehrere Elektrolysezellenstapeleinheiten.

**12.** Elektrolytische Energieerzeugungsanlage nach Anspruch 11, wobei die eine oder mehreren Elektrolysezellenstapeleinheiten jeweils einen oder mehrere Stapel von Festoxidelektrolyse-/Brennstoffzellen (SOEC/SOFC) und Schmelzkarbonatelektrolyse-/Brennstoffzellen (MCEC/MCFC), alkalische Hochtemperatur- und Druckelektrolyse/Brennstoffzellen und protonenleitende Elektrolyse/Brennstoffzellen mit keramischem Elektrolyt (PCEC/PCFC) umfassen.

**13.** Elektrolytische Energieerzeugungsanlage nach einem der Ansprüche 11 oder 12, wobei die elektrolytische Energieerzeugungsanlage eine elektrische Gesamtaufnahmeleistung von 1 MW oder mehr aufweist.

**14.** Ein Verfahren zur Energieversorgung mehrerer Elektrolysezellenstapeleinheiten, umfassend:

Kopplung einer gemeinsamen Verteilerschiene, die einen Transformator, einen oder mehrere Gleichrichter und einen Eingangsfilter umfasst, zwischen einem Stromnetz und mehreren parallel angeordneten DC/DC-Wandlermodulen;
Verbindung jedes DC/DC-Wandlermoduls mit einer separaten Elektrolysezellenstapeleinheit; und
unabhängige Versorgung einer oder eines Teils der Elektrolysezellenstapeleinheiten mit Spannung über DC/DC-Wandlermodule, mit einer vorgegebenen Variation der Stromstärke, Leistung und/oder Spannung, so dass ein nahezu thermoneutraler Betrieb bei Teillast ermöglicht wird, indem die integrale Joulesche Reaktionswärmeproduktion mit dem integralen Reaktionswärmeverbrauch innerhalb der Elektrolysezellenstapeleinheit abgestimmt wird und/oder
unabhängige Umkehrung des Stroms, der einer oder einem Teil der mehreren Elektrolysezellenstapeleinheiten über ein DC/DC-Wandlermodul zugeführt wird, um den Brennstoffzellenbetrieb der Elektrolysezellenstapeleinheiten zu bewirken.

**15.** Verfahren zur Energieversorgung mehrerer Elektrolysezellenstapeleinheiten nach Anspruch 14, welches weiterhin einen Schritt des Erfassens physikalischer Daten in Bezug auf eine oder mehrere Elektrolysezelleneinheiten umfasst, sowie das Steuern der Stromumkehr und/oder der vorgegebenen Änderung der Stromstärke, Leistung und/oder Spannung basierend auf Messungen der erfassten physikalischen Daten, wobei die physikalischen Daten vorzugsweise Impedanz umfassen, ferner bevorzugt Laplace-Transformationsimpedanz.

**Revendications**

**1.** Système convertisseur de puissance destiné à une pluralité d'unités d'empilement de cellules d'électrolyse, comprenant :

un agencement parallèle de multiples modules convertisseurs CC-CC ;
dans lequel chaque module convertisseur CC-CC est configuré pour alimenter une seule unité d'empilement de cellules d'électrolyse ; et
dans lequel chaque module convertisseur CC-CC est capable de fournir à ladite unité d'empilement de cellules d'électrolyse une variation prédéfinie de courant, de puissance et/ou de tension de façon à permettre un fonctionnement quasiment neutre thermiquement sous une charge partielle en faisant correspondre la production intégrale de chaleur en Joule avec la consommation intégrale de chaleur de réaction à l'intérieur de ladite unité d'empilement de cellules d'électrolyse, et/ou

dans lequel chaque module convertisseur CC-CC est capable d'inverser le courant fourni à ladite unité d'empilement de cellules d'électrolyse, ce qui amène ladite unité d'empilement de cellules d'électrolyse à fonctionner en mode pile à combustible.

**2.** Système convertisseur de puissance selon la revendication 1, dans lequel seul un ou une fraction des modules convertisseurs CC-CC applique simultanément la variation prédéfinie de courant, de puissance et/ou de tension, ou l'inversion de courant.

**3.** Système convertisseur de puissance selon la revendication 1 ou 2, dans lequel chaque module convertisseur CC-CC comprend en outre un ou plusieurs commutateurs électroniques configurés pour inverser le courant fourni à l'unité d'empilement de cellules d'électrolyse, soit pendant un fraction soit pendant la totalité de la variation prédéfinie de courant, de puissance et/ou de tension, ce qui entraîne le fonctionnement comme une pile à combustible de l'unité d'empilement de cellules d'électrolyse.

**4.** Système convertisseur de puissance selon l'une quelconque des revendications 1 à 3, dans lequel la variation prédéfinie de courant, de puissance et/ou de tension ou l'inversion de courant est périodique, ayant de préférence une fréquence dans la plage allant de 10 mHz à moins de 20 kHz et/ou comprenant de préférence des profils de variation ayant une forme d'onde sinusoïdale et/ou une forme d'onde carrée.

**5.** Système convertisseur de puissance selon l'une quelconque des revendications 1 à 4, comprenant en outre une unité de commande connectée à chacun des modules convertisseurs CC-CC et configurée pour coordonner l'inversion de courant ou la variation prédéfinie de courant, de puissance et/ou de tension dans les modules convertisseurs CC-CC de manière alternée.

**6.** Système convertisseur de puissance selon la revendication 5, dans lequel l'unité de commande est configurée pour coordonner l'inversion de courant ou la variation prédéfinie de courant, de puissance et/ou de tension dans un ou plusieurs modules convertisseurs CC-CC de sorte que, pendant l'inversion de courant ou la variation prédéfinie, le courant, la puissance et/ou la tension sur la liaison CC commune demeure essentiellement constante.

**7.** Système convertisseur de puissance selon l'une quelconque des revendications 1 à 6, comprenant en outre un capteur configuré pour acquérir des informations physiques liées à une unité d'empilement de cellules d'électrolyse, et un contrôleur PID (régulation proportionnelle-intégrale-dérivée) configuré pour commander l'inversion de courant ou la variation de courant, de puissance et/ou de tension sur la base de mesures des données de capteur acquises.

**8.** Système convertisseur de puissance selon l'une quelconque des revendications 1 à 7, dans lequel la durée de chaque inversion de courant ou chaque variation de courant, de puissance et/ou de tension appliquée à une seule unité d'empilement de cellules d'électrolyse est dans la plage de 1 $\mu$s à 1000 $\mu$s.

**9.** Système convertisseur de puissance selon l'une quelconque des revendications 1 à 8, dans lequel :

$$n_c = n_e = x \cdot \frac{T_p}{T_b}$$

où $n_c$ représente le nombre total de modules convertisseurs CC-CC, $n_e$ représente le nombre total d'unités d'empilement de cellules d'électrolyse, $T_p$ représente la durée de mise sous tension des unités d'empilement de cellules d'électrolyse, $x$ est un entier supérieur ou égal à 1 et $T_b$ représente la durée de l'inversion de courant ou de la variation prédéfinie de courant, de puissance et/ou de tension appliquée par l'un des modules convertisseurs CC-CC.

**10.** Système de distribution d'électricité destiné à une pluralité d'unités d'empilement de cellules d'électrolyse, comprenant :

un bus commun comprenant :

un transformateur,
un ou plusieurs redresseurs, et
un filtre d'entrée ; et

un système convertisseur de puissance selon l'une quelconque des revendications 1 à 9 connecté au bus commun.

11. Centrale électrique à électrolyse comprenant le système de distribution d'électricité selon la revendication 10 et une pluralité d'unités d'empilement de cellules d'électrolyse.

12. Centrale électrique à électrolyse selon la revendication 11, dans laquelle la ou les plusieurs unités d'empilement de cellules d'électrolyse comprennent chacune un ou plusieurs empilements de cellules d'électrolyse/piles à combustible à oxyde solide (SOEC/SOFC), de cellules d'électrolyse/piles à combustible au carbonate fondu (MCEC/MCFC), de cellules d'électrolyse/piles à combustible alcalines à haute température et haute pression et de cellules d'électrolyse/piles à combustible à conduction de protons et électrolyte céramique (PCEC/PCFC).

13. Centrale électrique à électrolyse comprenant le système de distribution d'électricité selon l'une quelconque des revendications 11 ou 12, la centrale électrique à électrolyse ayant une puissance électrique totale en entrée de 1 MW ou plus.

14. Procédé de distribution d'électricité à une pluralité d'unités d'empilement de cellules d'électrolyse, comprenant :

le couplage d'un bus commun comprenant un transformateur, un ou plusieurs redresseurs et un filtre d'entrée, entre un réseau électrique et une pluralité de modules convertisseurs CC-CC disposés en parallèle ;
la connexion de chaque module convertisseur CC-CC à une unité d'empilement de cellules d'électrolyse distincte ; et
la fourniture, de manière indépendante, d'une tension à l'une ou à une fraction des unités d'empilement de cellules d'électrolyse via un ou des modules convertisseurs CC-CC avec une variation prédéfinie de courant, de puissance et/ou de tension de façon à permettre un fonctionnement quasiment neutre thermiquement sous une charge partielle en faisant correspondre la production intégrale de chaleur en Joule avec la consommation intégrale de chaleur de réaction à l'intérieur de l'unité d'empilement de cellules d'électrolyse, et/ou
l'inversion, de manière indépendante, du courant fourni à l'une ou à une fraction des unités d'empilement de cellules d'électrolyse via un module convertisseur CC-CC, pour obtenir que ladite ou lesdites unités d'empilement de cellules d'électrolyse fonctionnent comme pile à combustible.

15. Procédé de distribution d'électricité à une pluralité d'unités d'empilement de cellules à électrolyse selon la revendication 14, comprenant en outre une étape consistant à acquérir des données physiques liées à une ou plusieurs unités d'empilement de cellules d'électrolyse, et à commander l'inversion de courant et/ou la variation de courant, de puissance et/ou de tension sur la base de mesures des données physiques acquises, les données physiques comportant de préférence l'impédance, en outre et de préférence l'impédance après transformation de Laplace.

**FIG. 1A**

**FIG. 1B**

FIG. 2

**FIG. 3**

**FIG. 4**

**FIG. 5**

**FIG. 6**

**FIG. 7**

$P_{stack}$ = 1.1 kW (35% of $P_{stack, tlv}$)

FIG. 8

**FIG. 9**

FIG. 10

**FIG. 11**

FIG. 12

FIG.13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020201485 A1
- EP 2963761 A1
- US 20170005357 A1
- WO 2018033948 A1
- US 20030065461 A1

### Non-patent literature cited in the description

- **C. GRAVES et al.** *Nature Materials,* 2015, vol. 14, 239-244
- Solid oxide electrolysis for grid balancing. *Final Report for Energinet.dk,* 35
- **B. YODWONG et al.** *Electronics,* 2020, vol. 9, 912